(19) Europäisches Patentamt
European Patent Office
Office européen des brevets

(11) **EP 3 374 800 B1**

(12) **FASCICULE DE BREVET EUROPEEN**

(45) Date de publication et mention de la délivrance du brevet:
**01.01.2020 Bulletin 2020/01**

(21) Numéro de dépôt: **16798437.6**

(22) Date de dépôt: **10.11.2016**

(51) Int Cl.:
*G01S 19/39* (2010.01)    *G01C 25/00* (2006.01)

(86) Numéro de dépôt international:
**PCT/EP2016/077290**

(87) Numéro de publication internationale:
**WO 2017/081166 (18.05.2017 Gazette 2017/20)**

(54) **PROCÉDÉ DE DÉTECTION DE MOUVEMENTS PARASITES LORS D'UN ALIGNEMENT STATIQUE D'UNE CENTRALE INERTIELLE, ET DISPOSITIF DE DÉTECTION ASSOCIÉ**

VERFAHREN ZUR DETEKTION VON PARASITÄREN BEWEGUNGEN WÄHREND DER STATISCHEN AUSRICHTUNG EINER TRÄGHEITSMESSEINHEIT UND ZUGEHÖRIGE DETEKTIONSVORRICHTUNG

METHOD FOR DETECTING PARASITIC MOVEMENTS DURING STATIC ALIGNMENT OF AN INERTIAL MEASUREMENT UNIT, AND ASSOCIATED DETECTION DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.11.2015 FR 1560760**

(43) Date de publication de la demande:
**19.09.2018 Bulletin 2018/38**

(73) Titulaire: **Safran Electronics & Defense**
**92100 Boulogne-Billancourt (FR)**

(72) Inventeurs:
• **DEMANGE, Jean-Luc**
  **92100 Boulogne-Billancourt (FR)**
• **DESTELLE, Michel**
  **92100 Boulogne-Billancourt (FR)**

(74) Mandataire: **Regimbeau**
**20, rue de Chazelles**
**75847 Paris Cedex 17 (FR)**

(56) Documents cités:
WO-A1-2006/025825    WO-A2-2004/034077
FR-A1- 2 925 670

**Description**

**DOMAINE DE L'INVENTION**

La présente invention concerne un procédé de détection de mouvements parasites lors d'un alignement statique d'une centrale inertielle, et un dispositif pour mettre en œuvre un tel procédé.

**ETAT DE LA TECHNIQUE**

Une centrale inertielle est un dispositif configuré pour suivre l'état de mouvement d'un porteur, et ce à l'aide de mesures fournies par des capteurs inertiels embarqués sur le porteur.

L'alignement d'une centrale inertielle est une phase d'initialisation au cours de laquelle des valeurs initiales d'attitude, de vitesse et de position de la centrale inertielle sont calculées.

On distingue deux catégories d'alignements de centrale inertielle :

- l'alignement statique, au cours duquel le porteur est immobile,
- l'alignement en mouvement, au cours duquel le porteur mobile se déplace par rapport à la Terre.

Pendant un alignement statique, les mouvements du porteur dégradent la précision de l'initialisation de la navigation.

Il a ainsi été proposé de détecter ces mouvements parasites pour vérifier l'immobilité du porteur au cours d'un alignement statique.

Ces procédés de détection exploitent les mesures inertielles fournies par les capteurs inertiels de la centrale inertielle pour détecter les mouvements parasites du porteur. La demanderesse a notamment proposé un tel procédé dans le document FR 2 951 535 A1.

Cependant, les capteurs inertiels s'avèrent inefficaces pour détecter certains mouvements particuliers.

En particulier, les capteurs inertiels actuels, de précision limitée, ne permettent pas de détecter des mouvements oscillatoires à basse fréquence, auxquels sont soumis par exemple une plateforme pétrolière ou une piste d'hélicoptère sur le toit d'un gratte-ciel.

D'autre part, les capteurs inertiels, qui mesurent généralement des variations de vitesse, ne permettent pas de détecter un déplacement rectiligne uniforme du porteur durant un alignement statique (par exemple, une centrale inertielle de navigation d'un aéronef posé sur un bateau par mer calme).

On connaît par ailleurs du document WO 2006/025825 un procédé de détection de mouvements parasites lors d'un alignement statique d'une centrale inertielle se fondant sur la mesure d'une vitesse GPS au sol (« GPS autonomous ground speed »). Ce procédé est cependant d'une précision insuffisante pour permettre la détection des mouvements très particuliers susmentionnés : déplacement rectiligne uniforme, oscillations basse fréquence.

**EXPOSE DE L'INVENTION**

Un objectif de l'invention est de détecter des mouvements oscillatoires à basse fréquence ou des mouvements rectilignes uniformes d'une centrale inertielle au cours d'un alignement statique de cette centrale inertielle.

Il est ainsi proposé, selon un premier aspect de l'invention, un procédé de détection selon de mouvements parasites lors d'un alignement statique d'une centrale inertielle, comprend des étapes de :

- réception de mesures de radionavigation acquises par un récepteur à partir de signaux préalablement émis par un ensemble de satellites de radionavigation,
- estimation d'un déplacement de la centrale inertielle à partir des mesures acquises,
- comparaison du déplacement estimé avec un seuil prédéterminé,
- signalement d'un mouvement parasite de la centrale inertielle lorsque le déplacement franchit le seuil prédéterminé.

dans lequel l'estimation du déplacement de la centrale inertielle à partir des mesures acquises comprend les étapes suivantes, mises en œuvre pour chaque satellite :

- calcul d'une variation de position à partir :

  ◦ d'une phase d'un premier signal de radionavigation émis par le satellite et reçu par le récepteur à un instant de réception initial, et
  ◦ d'une phase d'un deuxième signal de radionavigation émis par le satellite et reçu par le récepteur à un instant de réception ultérieur,

- estimation d'un déplacement du récepteur par rapport au satellite entre l'instant de réception initial et l'instant de réception ultérieur, à partir des données suivantes:

  ○ une position du satellite à l'instant de réception initial,
  ○ une position du satellite à l'instant de réception ultérieur,
  ○ une position à l'instant de réception initial fournie par la centrale inertielle, et
  ○ une position à l'instant de réception ultérieur fournie par la centrale inertielle,

- calcul d'un écart entre la variation de position calculée et le déplacement du récepteur par rapport au satellite estimé, le déplacement de la centrale inertielle estimé dépendant de cet écart.

Les mesures fournies par le récepteur de signaux permettent de détecter des déplacements géographiques de la classe du centimètre par seconde. Ces mesures constituent ainsi des données d'entrées bien plus efficaces que des mesures inertielles pour estimer le déplacement de la centrale inertielle, en particulier estimer un déplacement causé par un mouvement oscillatoire à basse fréquence ou rectiligne uniforme.

En particulier, les sous-étapes de l'étape d'estimation de déplacement de la centrale inertielle, se fondant sur des phases reçues à des instants différents permettent d'obtenir de bien plus grandes précision qu'une estimation se fondant sur une vitesse GPS au sol. Ces phases constituent des données permettant d'estimer le déplacement de la centrale inertielle de façon particulièrement précise ; la précision de la discrimination entre mouvements parasites et non parasites s'en trouve également augmentée.

Le procédé de détection selon l'invention peut également comprendre les caractéristiques optionnelles suivantes, prises seules ou bien en combinaison lorsque cela est techniquement possible.

L'ensemble peut comprendre au moins quatre satellites. Avec un tel nombre de satellites, il est possible de déterminer un déplacement potentiellement parasite de la centrale inertielle suivant trois directions de l'espace, ainsi que la variation de biais de temps du récepteur (soit quatre inconnues), et ce sans faire d'hypothèse sur le déplacement de la centrale ou sur la précision du récepteur utilisé.

Dans un mode de réalisation, les deux informations sont une phase du premier signal et une phase du deuxième signal.

Les instants de réception initiaux peuvent être sensiblement identiques pour tous les satellites, et les instants de réception ultérieure être sensiblement identiques pour tous les satellites. Ceci a pour effet d'augmenter la précision de l'estimation du déplacement et donc de détecter des mouvements très ténus.

Le déplacement de la centrale peut en outre être estimé par une méthode des moindres carrés appliquée aux différents écarts calculés.

En outre, pour chaque signal de radionavigation émis par un des satellites, il peut être prévu que les mesures de navigation comprennent une position du satellite à un instant d'émission par le satellite, et que la position du satellite à l'instant de réception dudit signal est calculée à partir de la position du satellite à l'instant d'émission du même signal.

La position du satellite à l'instant d'émission peut être exprimée dans un repère terrestre de l'instant de réception, et être calculée par multiplication d'un vecteur de coordonnées du satellite à l'instant d'émission, les coordonnées étant exprimées dans le repère terrestre à l'instant d'émission, par une matrice représentative d'une rotation du repère terrestre durant la propagation du signal de radionavigation du satellite au récepteur, entre l'instant d'émission et l'instant de réception.

Le procédé peut également comprendre la réception d'un message du démarrage de l'alignement de la centrale inertielle, chaque signal reçu à un instant initial étant le premier signal reçu par le récepteur en provenance d'un des satellites, après la réception du message de démarrage. Ceci permet de détecter des mouvements parasites survenant au tout début de l'alignement statique.

L'estimation du déplacement de la centrale inertielle à partir des mesures acquises peut en outre comprendre le calcul, pour chaque satellite d'une variation, entre l'instant de réception initial et l'instant de réception ultérieur, du cosinus directeur d'une ligne de visée reliant le récepteur au satellite, le déplacement de la centrale inertielle estimé dépendant de la variation de cosinus directeur calculée. Comme le satellite se déplace par rapport au porteur de la centrale inertielle entre l'instant de réception initial et l'instant de réception ultérieur, la ligne de visée entre la réception et ce satellite peut également se déplacer dans cet intervalle de temps. La prise en compte de la variation de cosinus directeur de la ligne de visée permet donc d'encore améliorer la précision de l'estimation du déplacement de la centrale inertielle au cours de cette période et la précision de la discrimination entre mouvements parasites et non parasites du procédé s'en trouve donc encore augmentée.

Le procédé peut également comprendre une vérification de la validité des mesures acquises par le récepteur, l'étape d'estimation du déplacement étant mise en œuvre sélectivement sur la base de mesures déclarées valides. Ceci permet ainsi d'éviter des problèmes de fausse alarme ou de détection de mouvement parasite manquée en raison de défaillance dans des signaux de radionavigation reçus.

Selon un deuxième aspect de l'invention, il est proposé un procédé d'alignement statique d'une centrale inertielle comprenant des étapes de :

- détection d'un mouvement parasite de la centrale inertielle à l'aide du procédé selon l'une des revendications précédentes au cours de l'alignement statique,
- en réponse à la détection, suspension de l'alignement, ou reconfiguration d'au moins un paramètre d'alignement utilisé pour aligner la centrale inertielle, en fonction du mouvement parasite détecté.

Selon un troisième aspect de l'invention, il est proposé un dispositif de détection de mouvements parasites lors d'un alignement statique d'une centrale inertielle, le dispositif comprenant :

- une entrée pour recevoir des mesures de navigation acquises par un récepteur de signaux de radionavigation préalablement émis par un ensemble de satellites de radionavigation,
- une unité de traitement de données configurée pour :

  ○ estimer un déplacement de la centrale inertielle à partir des mesures de navigation acquises,
  ○ comparer le déplacement estimé avec un seuil prédéterminé,

- une sortie pour émettre des données signalant un mouvement parasite de la centrale inertielle lorsque le déplacement franchit le seuil prédéterminé, dans lequel l'estimation du déplacement de la centrale inertielle à partir des mesures acquises comprend les étapes suivantes, mises en œuvre par l'unité de traitement de données pour chaque satellite :

  - calcul d'une variation de position à partir :

    ○ d'une phase d'un premier signal de radionavigation émis par le satellite et reçu par le récepteur à un instant de réception initial, et
    ○ d'une phase d'un deuxième signal de radionavigation émis par le satellite et reçu par le récepteur à un instant de réception ultérieur,

  - estimation d'un déplacement du récepteur par rapport au satellite entre l'instant de réception initial et l'instant de réception ultérieur, à partir des données suivantes :

    ○ une position du satellite à l'instant de réception initial,
    ○ une position du satellite à l'instant de réception ultérieur,
    ○ une position à l'instant de réception initial fournie par la centrale inertielle, et
    ○ une position à l'instant de réception ultérieur fournie par la centrale inertielle,

  - calcul d'un écart entre la variation de position calculée et le déplacement du récepteur par rapport au satellite estimé, le déplacement de la centrale inertielle estimé dépendant de cet écart.

Ce dispositif peut comprendre en outre un récepteur de radionavigation configuré pour acquérir des mesures de radionavigation à partir de signaux de radionavigation préalablement émis par un satellite, et configuré pour transmettre lesdites mesures à l'unité de traitement de données.

Selon un quatrième aspect de l'invention, il est proposé un système comprenant :

- un dispositif de détection selon l'une des revendications suivant le troisième aspect de l'invention, et
- une unité de navigation configurée pour mettre en œuvre un alignement statique d'une centrale inertielle en fonction d'un mouvement parasite détecté par le dispositif de détection.

Selon un cinquième aspect de l'invention, il est proposé un produit programme d'ordinateur comprenant des instructions de code de programme pour l'exécution des étapes du procédé selon le premier aspect de l'invention, lorsque ce produit programme est exécuté par au moins une unité de traitement de données.

## DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

- La figure 1 représente schématiquement une centrale inertielle et un dispositif de détection de mouvements parasites selon un mode de réalisation de l'invention.
- Les figures 2 et 3 illustrent des étapes d'un procédé de détection de mouvements parasites mis en œuvre par le dispositif représenté en figure 1, selon un mode de réalisation de l'invention.

Sur l'ensemble des figures, les éléments similaires portent des références identiques.

## DESCRIPTION DETAILLEE DE L'INVENTION

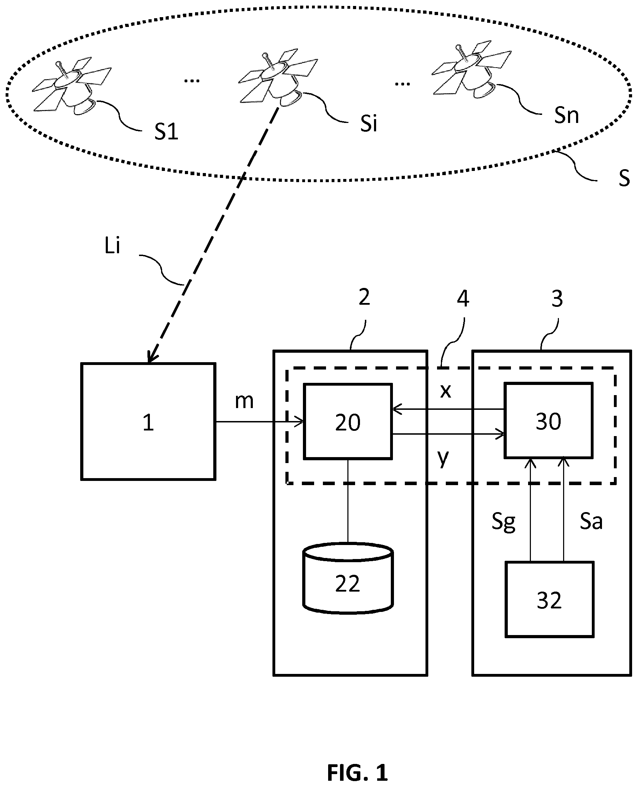

En référence à la **figure 1,** un système comprend un récepteur 1, un dispositif de détection 2 de mouvements parasites, et une centrale inertielle 3.

Le système est embarqué sur un porteur mobile tel qu'un véhicule, un bateau ou un aéronef.

Le récepteur 1 de signaux est connu en lui-même. Ce récepteur 1 comprend une ou plusieurs antennes configurées pour capter des signaux émanant d'un ensemble S de satellites de radionavigation S1 à Sn, par exemple des signaux de type GPS ou GNSS ou GALILEO. Le récepteur 1 comprend en outre des moyens pour produire des mesures à partir des signaux reçus par les antennes du récepteur 1.

Le récepteur 1 est par exemple configuré avec une fréquence d'échantillonnage prédéterminée.

Le récepteur 1 comprend en outre des moyens de recalage connus en eux même configurés pour recaler temporellement les mesures transportées par les différents signaux de radionavigation les unes par rapport aux autres.

Le récepteur 1 peut faire partie du dispositif de détection 2 ou bien constituer un composant autonome apte à communiquer avec le dispositif de détection 2, comme représenté sur la figure 1.

La centrale inertielle 3 comprend une unité de navigation 30 et des capteurs inertiels 32.

L'unité de navigation 30, connue en elle-même, est notamment configurée pour mettre en œuvre un alignement statique de la centrale inertielle 3 conformément à un procédé connu de l'état de la technique. L'unité de navigation 30 comprend par exemple au moins un processeur configuré pour exécuter un algorithme d'alignement statique.

Les capteurs inertiels 32 comprennent par exemple des accéléromètres fournissant des mesures Sa et/ou des gyromètres fournissant des mesures Sg.

La centrale inertielle 3 peut également comprendre une interface utilisateur.

Le dispositif de détection 2 est configuré pour détecter des mouvements parasites au cours d'un alignement statique mis en œuvre par l'unité de navigation 30 de la centrale inertielle 3.

Le dispositif de détection 2 comprend une entrée configurée pour recevoir des mesures acquises par le récepteur 1 de signaux émis par l'ensemble des satellites de radionavigation S.

Le dispositif de détection 2 comprend en outre une unité de traitement 20 de données, et des moyens de communication avec l'unité de navigation 30 de la centrale inertielle 3.

Les moyens de communication sont bidirectionnels : ils comprennent une entrée configurée pour recevoir des données x émanant de l'unité de navigation 30, une sortie configurée pour transmettre des données y produites par l'unité de traitement 20 à l'unité de navigation 30.

L'unité de traitement 20 de données comprend typiquement au moins un processeur pour mettre en œuvre un programme d'ordinateur. Ce programme d'ordinateur comprend des instructions de code de programme configurées pour mettre en œuvre un procédé de détection de mouvements parasites de la centrale inertielle 3 au cours de son alignement statique, lorsque ces instructions sont exécutées par le processeur de l'unité de traitement 20.

Par ailleurs, l'unité de traitement 20 de données et l'unité de navigation 30 peuvent être des composants physiques autonomes ou regroupés au sein d'un même boîtier.

Le dispositif de détection 2 comprend par ailleurs une mémoire 22 pour mémoriser des données, notamment des mesures reçues du récepteur 1.

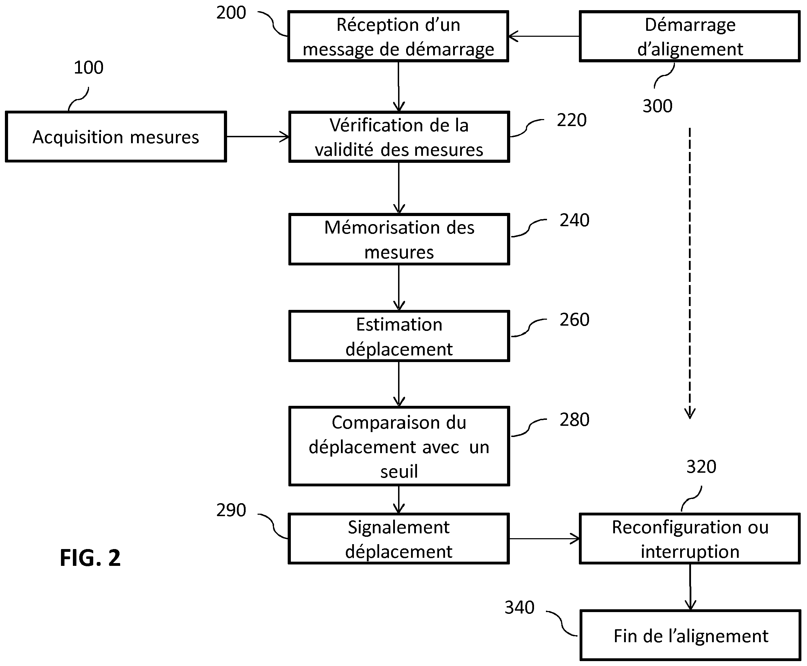

En référence à la **figure 2,** Le système représenté sur la figure 1 fonctionne comme suit.

Chacun des satellites de radionavigation de l'ensemble S, qu'on notera par convention Si, émet des signaux de radionavigation successifs. Chaque signal de radionavigation est caractérisé par un instant d'émission. Cet instant d'émission est renseigné dans le signal émis.

Lorsque le récepteur 1 est en vue d'un des satellites de radionavigation Si suivant une ligne de visée Li, le récepteur 1 reçoit les signaux successifs émis par ce satellite en des instants de réception différents, et acquiert 100 des mesures de navigation successives à partir des signaux reçus.

Dans la suite, une mesure de radionavigation, noté Mi désigne un ensemble de données relatives à un signal émis par un satellite Si donné parmi les satellites de l'ensemble S, signal reçu par le récepteur 1 à un instant de réception donné. Ainsi, une mesure de radionavigation Si est caractérisée par : l'identifiant du satellite émetteur Si appartenant à l'ensemble S, un instant d'émission de ce signal par ce satellite, un instant de réception par le récepteur 1 de ce signal, et des informations transportées par ce signal.

Une mesure de radionavigation Mi donnée comprend notamment des données représentatives de la phase du signal correspondant reçu par le récepteur 1.

Une mesure de radionavigation Mi donnée comprend par ailleurs une information de position du satellite émetteur Si datée de l'instant d'émission du signal émis par ce satellite. Cette position est exprimée habituellement sous la forme de coordonnées cartésiennes dans un repère terrestre, c'est-à-dire un repère fixe par rapport à la Terre.

L'ensemble des mesures de radionavigation Mi correspondant aux satellites de l'ensemble S acquises 100 par le récepteur 1 sont transmises à l'unité de traitement 20 du dispositif de détection 2. Chaque mesure est horodatée avec l'instant de réception du signal correspondant par le récepteur 1.

Le récepteur 1 produit les mesures de radionavigation au moyen d'une fréquence d'échantillonnage prédéterminée. Ainsi, deux signaux de radionavigation émis par deux satellites Si et Sj différents atteignant le récepteur 1 en des instants proches (dont l'écart est inférieur à la période d'échantillonnage du récepteur 1) peuvent produire deux mesures horodatées avec le même instant de réception par le récepteur 1. Ces deux signaux sont considérés par la suite comme simultanées. A cet égard, les moyens de recalage du récepteur 1 corrigent les informations transportées par les signaux de radionavigation de sorte à tenir compte de l'échantillonnage effectué.

A un instant donné, l'unité de navigation 30 déclenche 300 un procédé d'alignement statique de la centrale inertielle 3.

L'unité de navigation 30 génère un message indiquant le démarrage de l'alignement statique, et transmet ce message à l'unité de traitement 20 du dispositif de détection 2.

Sur réception 200 du message de démarrage, l'unité de traitement 20 met en œuvre un procédé de détection de mouvements parasites au cours de l'alignement statique.

L'unité de traitement 20 vérifie 220 la validité des mesures de radionavigation qu'elle reçoit du récepteur 1, et en particulier la validité des informations de phase contenues dans ces mesures. Si une mesure est déclarée invalide, alors la mesure ne sera pas utilisée par l'unité de traitement 20. Si la mesure est déclarée valide, alors la mesure est utilisable par l'unité de traitement 20.

Cette vérification 220 permet de ne pas dégrader la détection de mouvements parasites à causes d'informations erronées contenues dans les mesures fournies par le récepteur 1.

La vérification 220 est de préférence déclenchée après réception par l'unité de traitement 20 du message de démarrage de la phase d'alignement de la centrale inertielle 3.

L'unité de traitement 20 mémorise 240 les mesures de radionavigation qu'elle reçoit du récepteur 1, par exemple sélectivement les mesures déclarées valides à l'issue de la vérification 220.

Par convention, on appellera « ensemble de mesures de radionavigation initiales » l'ensemble des premières mesures de radionavigation Mi élaborées à partir des signaux émis par les satellites Si de l'ensemble S et mémorisées par l'unité de traitement 20 après l'instant auquel l'unité de traitement 20 a reçu le message de démarrage d'alignement. L'instant de réception par le récepteur 1 de ces mesures dont sont issues les mesures initiales est en outre appelé « instant de réception initial » ou plus simplement « instant initial », et cet instant est noté $t^r_{début\_aln}$.

On considère en outre un deuxième ensemble de mesures de radionavigation, qu'on appellera par convention « ensemble de mesures de radionavigation ultérieure » mémorisée par l'unité de traitement 20, ultérieure à l'ensemble de mesures initiale, et issue des signaux de radionavigation émis par les satellites Si de l'ensemble S et reçu par le récepteur 1 en un instant $t^r$ ultérieur à l'instant initial $t^r_{début\_aln}$.

On a, pour chacun des satellites Si,

$$\Delta t = t^r - t^r_{début\_aln}$$

En d'autres termes, les instants de réception initiaux sont sensiblement identiques pour tous les satellites Si, et les instants de réception ultérieure sont sensiblement identiques pour tous les satellites Si.

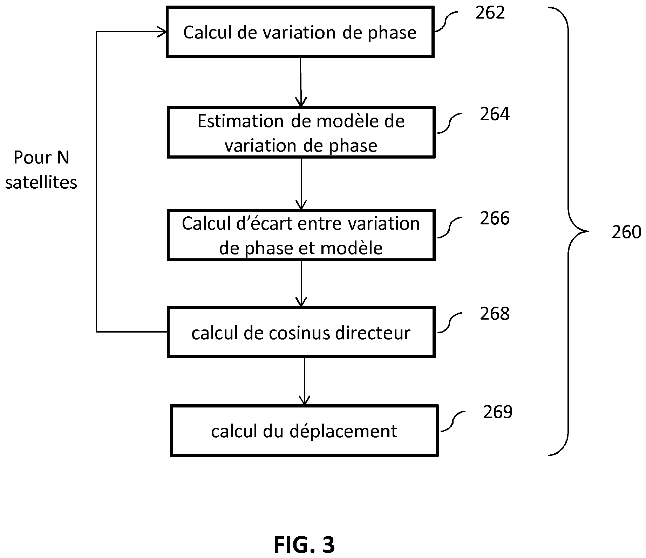

En référence à la **figure 3,** l'estimation 260 du déplacement comprend les étapes suivantes.

L'unité de traitement 20 calcule 262, à partir de l'ensemble de mesures de radionavigation initiale d'une part et à partir de l'ensemble de mesures de radionavigation ultérieure d'autre part, et pour chacun des satellites Si de l'ensemble S, une variation de position *mesure DR*$_i$(*t*$^r$) entre le signal émis par le satellite Si, reçu à l'instant de réception initial $t^r_{début\_aln}$ et le signal émis par le satellite Si, reçu à l'instant de réception ultérieur $t^r$.

Pour un satellite Si donné, la variation de position associée est fonction de deux informations: une information $Info_i\left(t^r_{début\_aln}\right)$ comprise dans la mesure initiale mémorisée issue du satellite Si, et une information

$Info_i\left(t^r_{début\_aln} + \Delta t\right)$ comprise dans la mesure ultérieure correspondante mémorisée issue du satellite Si.

La variation de position est ainsi calculée selon la formule générale suivante :

$$mesureDR_i(t^r) = f\left(Info_i(t^r), Info_i\left(t^r_{début\_aln}\right)\right)$$
$$= f\left(Info_i\left(t^r_{début\_aln} + \Delta t\right), Info_i\left(t^r_{début\_aln}\right)\right)$$

Dans un mode de réalisation particulièrement avantageux en termes de précision dans les résultats obtenus, les deux informations $Info_i$ sont des phases $\phi_i$. La formule générale ci-dessus est alors :

$$mesureDR_i(t^r) = f\left(\phi_i\left(t^r_{début\_aln} + \Delta t\right), \phi_i\left(t^r_{début\_aln}\right)\right)$$
$$= \frac{\lambda_i}{2\pi}\left(\phi_i\left(t^r_{début\_aln} + \Delta t\right) - \phi_i\left(t^r_{début\_aln}\right)\right)$$

où $\lambda_i$ est la longueur d'onde des signaux émis par le satellite Si.

Une telle variation de position est également appelée « delta-range » dans la littérature.

Dans d'autres modes de réalisation de l'étape 262, les deux informations sont des pseudo-vitesses ou des pseudo-distances élaborées par le récepteur 1.

Par ailleurs, l'unité de traitement 20 estime 264, pour chaque satellite Si, un déplacement du récepteur 1 par rapport au satellite Si entre l'instant de réception initial $t^r_{début\_aln}$ et l'instant de réception ultérieur $t^r$.

Dans un mode de réalisation, le déplacement du récepteur 1 par rapport au satellite Si est calculé 264 sur la base des informations de positions suivantes :

• la position du satellite Si à l'instant de réception initial $t^r_{début\_aln}$, notée $PS_i{}_{[T\_t^r_{début\_aln}]}\left(t^{e_i}_{début\_aln}\right)$, où $\left[T\_t^r_{début\_aln}\right]$

représente le repère terrestre à l'instant de réception initial $t^r_{début\_aln}$

• la position du satellite Si à l'instant de réception ultérieur $t^r$, notée $PS_i{}_{[T\_t^r]}\left(t^{e_i}\right)$, où $\left[T\_t^r_u\right]$ représente le repère

terrestre à l'instant de réception ultérieur représente le repère terrestre à l'instant de réception initial $t^r_{début\_aln}$

• une position de la centrale inertielle 3 à l'instant de réception initial $t^r_{début\_aln}$, notée $\left[PI\right]_{[T\_t^r_{début\_aln}]}$, et

• une position de la centrale inertielle 3 à l'instant de réception ultérieur $t^r$, notée notée $\left[PI\right]_{[T\_t^r]}$

Le calcul 264 mis en œuvre sur la base de ces informations peut alors être le suivant :

$$\text{modèle DR}_i\left(t^r\right) = \left\lVert \left[PI\right]_{[T\_t^r]} - PS_i{}_{[T\_t^r]}\left(t^{e_i}\right)\right\rVert - \left\lVert \left[PI\right]_{[T\_t^r_{début\_aln}]} - PS_i{}_{T\_t^r_{début\_aln}}\left(t^{e_i}_{début\_aln}\right)\right\rVert$$

Le déplacement du récepteur 1 par rapport au satellite Si est une distance entaché principalement d'erreurs d'horloge du récepteur 1.

Les deux positions de la centrale inertielle 3 sont calculées au moyen de mesures fournies par les capteurs inertiel 32 de la centrale inertielle 3 (typiquement des mesures d'accélération Sa, et des mesures de vitesse angulaires Sg).

La position du satellite Si : $PS_i{}_{[T\_t^r_{(..)}]}\left(t^{e_i}_{(..)}\right)$ à un instant d'émission $t^{e_i}_{(..)}$ d'un signal émis par ce satellite est calculée à partir de la position : $PS_i\left(t_{(..)}^{e_i}\right)_{\left[T\_t_{(..)}^{e_i}\right]}$ du satellite S à l'instant $t_{(..)}^{e_i}$ où le satellite Si a émis ce signal, comme suit :

$$PS_i\left(t_{(..)}^{e_i}\right)_{\left[T\_t_{(..)}^{r}\right]} = \begin{bmatrix} \cos\theta_i & \sin\theta_i & 0 \\ -\sin\theta_i & \cos\theta_i & 0 \\ 0 & 0 & 1 \end{bmatrix} \cdot PS_i\left(t_{(..)}^{e_i}\right)_{\left[T\_t_{(..)}^{e_i}\right]}$$

Dans cette équation, les deux positions du satellite Si se présentent sous la forme de vecteurs de coordonnées exprimées dans le repère terrestre précédemment mentionné. Le vecteur de position du satellite Si à l'instant d'émission $t_{(..)}^{e_i}$ est multiplié par une matrice représentative d'une rotation du repère terrestre durant la propagation du signal de navigation entre l'instant d'émission $t_{(..)}^{e_i}$ et l'instant de réception $t_{(..)}^{r}$, de sorte à produire le vecteur de position du satellite S à l'instant de réception $t_{(..)}^{r}$.

L'unité de traitement 20 calcule 266 ensuite un écart, ou innovation, entre la variation de position calculée dans l'étape 262 et le déplacement estimé dans l'étape 264 :

$$innoDR_i(t^r) = mesureDR_i(t^r) - mod\grave{e}leDR_i(t^r)$$

Par ailleurs, l'unité de traitement 20 calcule une variation, entre l'instant de réception initial $t_{d\acute{e}but\_aln}^{r}$ et l'instant de réception ultérieur $t^r$, du cosinus directeur de la ligne de visée Li reliant le récepteur 1 au satellite Si.

Cette variation de cosinus directeur, notée $\Delta u_i(t^r)$ s'exprime également comme un vecteur de coordonnées dans le repère terrestre précité, résultant du calcul 268 suivant :

$$\Delta u_i\left(t^r\right) = \begin{bmatrix} \Delta u_{i\_x}\left(t^r\right) \\ \Delta u_{i\_y}\left(t^r\right) \\ \Delta u_{i\_z}\left(t^r\right) \end{bmatrix} =$$

$$\frac{PI_{\left[T\_t^r\right]} - PS_i\left(t^{e_i}\right)_{\left[T\_t^r\right]}}{\left\|PI_{\left[T\_t^r\right]} - PS_i\left(t^{e_i}\right)_{\left[T\_t^r\right]}\right\|} - \frac{PI_{\left[T\_t_{d\acute{e}but\_aln}^{r}\right]} - PS_i\left(t_{d\acute{e}but\_aln}^{e_i}\right)_{T\_\left[t_{d\acute{e}but\_aln}^{r}\right]}}{\left\|PI_{\left[T\_t_{d\acute{e}but\_aln}^{r}\right]} - PS_i\left(t_{d\acute{e}but\_aln}^{e_i}\right)_{T\_\left[t_{d\acute{e}but\_aln}^{r}\right]}\right\|}$$

L'unité de traitement 20 dispose à ce stade d'un ensemble de $n$ innovations (ou écarts) : $innoDR\_i(t^r)$ et d'un ensemble de $n$ variations de cosinus directeur : $\Delta u_i(t^r)$ entre les deux instants de réception $t^r$ et $t_{d\acute{e}but\_aln}^{r}$, chaque innovation étant issue de mesures provenant d'un satellite Si différent, de même que chaque variation de cosinus directeur.

L'unité de traitement 20 estime 269 le déplacement de la centrale inertielle 3 depuis le temps initial $t_{d\acute{e}but\_aln}^{r}$ à l'aide des $n$ innovations et des $n$ variations de cosinus directeur.

Quatre valeurs peuvent être déterminer pour caractériser de façon complète le déplacement de la centrale inertielle : trois composantes du déplacement de la centrale inertielle suivant trois directions de l'espace depuis l'instant initial $t^r_{début\_aln}$ et la variation de biais de temps du récepteur 1 depuis l'instant initial $t^r_{début\_aln}$.

Dans un mode de réalisation, l'unité de traitement 20 estime 269 le déplacement de la centrale inertielle 3 depuis le temps initial $t^r_{début\_aln}$ selon les trois axes x, y, z du repère ∟T_$t^r$⌐ : $\Delta r(t^r) = \begin{bmatrix} \Delta r\_x(t^r) \\ \Delta r\_y(t^r) \\ \Delta r\_z(t^r) \end{bmatrix}$, ainsi que la variation de biais de temps du récepteur depuis le temps initial : $\Delta b(t^r)$ à chaque instant de réception $t^r$ à partir de l'ensemble des écarts calculés : *innoDR_i(t^r)* et de l'ensemble des variations de cosinus directeurs : $\Delta u_i(t^r)$ associés.

L'unité de traitement 20 utilisé par exemple un algorithme des moindres carrés pour ce calcul de déplacement. Pour ce faire, l'unité de traitement 20 construit la matrice $H(t^r)$ suivante à partir de l'ensemble des variations de cosinus directeur associés:

$$H(t^r) = \begin{bmatrix} \Delta u_{1\_x}(t^r) & \Delta u_{1\_y}(t^r) & \Delta u_{1\_z}(t^r) & 1 \\ \vdots & \vdots & \vdots & 1 \\ \Delta u_{n\_x}(t^r) & \Delta u_{n\_x}(t^r) & \Delta u_{n\_z}(t^r) & 1 \end{bmatrix}$$

L'unité de traitement 20 estime le déplacement de la centrale inertielle 3 comme suit :

$$\begin{bmatrix} \Delta r\_x(t^r) \\ \Delta r\_y(t^r) \\ \Delta r\_z(t^r) \\ \Delta b(t^r) \end{bmatrix} = \left( {}^t H(t^r) H(t^r) \right)^{-1} {}^t H(t^r) \begin{bmatrix} \text{innoDR}_1(t^r) \\ \vdots \\ \text{innoDR}_n(t^r) \end{bmatrix}$$

On notera que, dans le mode de réalisation de l'étape 269 décrit ci-dessus, quatre écarts dépendant de mesures issues de quatre satellites Si différents ont été utilisés. Ceci permet de déterminer de façon directe les quatre inconnues que sont les mouvements de la centrale inertielle suivants les axes x, y, z depuis l'instant initial, ainsi que la variation de biais de temps du récepteur 1 depuis le temps initial, via quatre équations.

Il est cependant envisageable d'utiliser un nombre *n* de satellite inférieur à 4, pour mettre en œuvre ce calcul, moyennant des hypothèses supplémentaires concernant certaines des quatre inconnues précitées. Par exemple, dans certains contextes d'alignement statique, il peut être fait l'hypothèse que le déplacement de la centrale inertielle suivant au moins un des axes du repère précité (par exemple l'axe z) est nul. Dans ce cas, le procédé mis en œuvre de déterminera évidemment pas de mouvement de la centrale, potentiellement parasite, suivant cet axe. Par ailleurs, la quatrième inconnue que constitue la variation de biais de temps du récepteur 1 peut être considérée nulle lorsque le récepteur 1 dispose d'une horloge suffisamment précise telle qu'une horloge atomique.

Dans une variante particulière du procédé, un pré-filtrage temporel sur les écarts ou innovations calculés est mis en œuvre pour diminuer par exemple des bruits d'environnement générés par le porteur.

De retour à la **figure 2,** l'unité de traitement 20 compare par exemple 280 la norme du déplacement estimé $\|\Delta r(r^t)\|$ (ou toute autre fonction élaborée à partir de ses composantes) à un ou plusieurs seuils prédéterminés. Avantageusement, ces seuils sont choisis en fonction de la ou des statistiques du bruit résiduel sur les mesures de phase acquises par le récepteur 1 pour un porteur considéré dans un état statique et pour une probabilité de fausse alarme associée à ce test. Plusieurs statistiques peuvent être nécessaires pour prendre en compte des facteurs influents sur le bruit résiduel comme l'influence de l'élévation du satellite Si au travers de l'erreur de propagation troposphérique.

Si les déplacements estimés s'avèrent être inférieurs aux seuils, alors ces déplacements sont considérés comme étant des mouvements négligeables.

Si les déplacements estimés s'avèrent être supérieurs ou égaux aux seuils, alors ces déplacements sont considérés comme étant des mouvements parasites susceptibles de nuire au bon alignement de la centrale toujours en cours. Dans ce deuxième cas, l'unité de traitement 20 génère un message de signal de ce mouvement parasite qu'il transmet 290 à l'unité de navigation 30, qui est toujours en train de mettre en œuvre l'alignement de la centrale inertielle 3.

Sur réception de ce message de signalement, l'unité de navigation 30 peut adopter plusieurs stratégies 320.

Une première stratégie est d'interrompre l'alignement en cours.

Une deuxième stratégie est de poursuivre l'alignement tout en tenant compte du mouvement parasite qui vient d'être détecté ; par exemple, l'unité de navigation 30 reconfigure au moins un paramètre d'alignement utilisé par l'algorithme d'alignement, à partir du déplacement $\Delta r$ estimé par l'unité de traitement 20 et considéré comme parasite.

L'alignement se termine 340 ainsi de façon prématurée, ou après avoir tenu compte du mouvement parasite détecté.

**Revendications**

1. Procédé de détection de mouvements parasites lors d'un alignement statique d'une centrale inertielle (3), le procédé étant **caractérisé par** des étapes de :

   • réception de mesures de radionavigation acquises (100) par un récepteur (1) à partir de signaux préalablement émis par un ensemble (S) de satellites de radionavigation,
   • estimation (260) d'un déplacement de la centrale inertielle (3) à partir des mesures acquises,
   • comparaison (280) du déplacement estimé avec un seuil prédéterminé,
   • signalement (290) d'un mouvement parasite de la centrale inertielle (3) lorsque le déplacement franchit le seuil prédéterminé,

   **caractérisé en ce que** l'estimation (260) du déplacement de la centrale inertielle (3) à partir des mesures acquises comprend les étapes suivantes, mises en œuvre pour chaque satellite :

   • calcul (262) d'une variation de position à partir :

      ◦ d'une phase d'un premier signal de radionavigation émis par le satellite et reçu par le récepteur à un instant de réception initial, et
      ◦ d'une phase d'un deuxième signal de radionavigation émis par le satellite et reçu par le récepteur à un instant de réception ultérieur,

   • estimation (264) d'un déplacement du récepteur par rapport au satellite entre l'instant de réception initial et l'instant de réception ultérieur, à partir des données suivantes :

      ◦ une position du satellite à l'instant de réception initial,
      ◦ une position du satellite à l'instant de réception ultérieur,
      ◦ une position à l'instant de réception initial fournie par la centrale inertielle (3), et
      ◦ une position à l'instant de réception ultérieur fournie par la centrale inertielle (3),

   • calcul (266) d'un écart entre la variation de position calculée et le déplacement du récepteur par rapport au satellite estimé, le déplacement de la centrale inertielle estimé dépendant de cet écart.

2. Procédé selon la revendication précédente, comprenant en outre :

   • la réception d'un message du démarrage de l'alignement de la centrale inertielle, chaque signal reçu à un instant initial étant le premier signal reçu par le récepteur en provenance d'un des satellites, après la réception du message de démarrage.

3. Procédé selon l'une des revendications précédentes, dans lequel l'estimation (260) du déplacement de la centrale inertielle à partir des mesures acquises comprend la sous-étape suivante mise en œuvre pour chaque satellite :

   • calcul (268) d'une variation, entre l'instant de réception initial et l'instant de réception ultérieur, du cosinus directeur d'une ligne de visée (L) reliant le récepteur au satellite, le déplacement de la centrale inertielle estimé dépendant de la variation de cosinus directeur calculée.

4. Procédé selon la revendication précédente, dans lequel l'ensemble (S) comprend au moins quatre satellites.

5. Procédé selon l'une des revendications précédentes, dans lequel les instants de réception initiaux sont sensiblement identiques pour tous les satellites, et les instants de réception ultérieure sont sensiblement identiques pour tous les satellites.

6. Procédé selon l'une des revendications précédentes, dans lequel le déplacement de la centrale est estimé (269) par une méthode des moindres carrés appliquée aux différents écarts calculés.

**7.** Procédé selon l'une des revendications précédentes, dans lequel, pour chaque signal de radionavigation émis par un des satellites,

- les mesures de navigation comprennent une position du satellite à un instant d'émission par le satellite,
- la position du satellite à l'instant de réception dudit signal est calculée à partir de la position du satellite à l'instant d'émission du même signal.

**8.** Procédé selon la revendication précédente, dans lequel la position du satellite à l'instant d'émission est exprimée dans un repère terrestre de l'instant de réception, et est calculée par multiplication :

- d'un vecteur de coordonnées du satellite à l'instant d'émission, les coordonnées étant exprimées dans le repère terrestre à l'instant d'émission, par
- une matrice représentative d'une rotation du repère terrestre durant la propagation du signal de radionavigation du satellite au récepteur, entre l'instant d'émission et l'instant de réception.

**9.** Procédé selon l'une des revendications précédentes, comprenant une vérification (220) de la validité des mesures acquises par le récepteur (1), l'étape d'estimation (266) du déplacement étant mise en œuvre sélectivement sur la base de mesures déclarées valides.

**10.** Procédé d'alignement statique d'une centrale inertielle (3) comprenant des étapes de :

- détection d'un mouvement parasite de la centrale inertielle (3) à l'aide du procédé selon l'une des revendications précédentes au cours de l'alignement statique,
- en réponse à la détection, suspension (320) de l'alignement, ou reconfiguration d'au moins un paramètre d'alignement utilisé pour aligner la centrale inertielle, en fonction du mouvement parasite détecté.

**11.** Dispositif (2) de détection de mouvements parasites lors d'un alignement statique d'une centrale inertielle (3), le dispositif comprenant :

- une entrée pour recevoir des mesures de navigation acquises par un récepteur (1) de signaux de radionavigation préalablement émis par un ensemble (S) de satellites de radionavigation,
- une unité de traitement de données (20) configurée pour :

  ◦ estimer un déplacement de la centrale inertielle (3) à partir des mesures de navigation acquises,
  ◦ comparer le déplacement estimé avec un seuil prédéterminé,

- une sortie pour émettre des données signalant un mouvement parasite de la centrale inertielle lorsque le déplacement franchit le seuil prédéterminé,

**caractérisé en ce que** l'estimation (260) du déplacement de la centrale inertielle (3) à partir des mesures acquises comprend les étapes suivantes, mises en œuvre par l'unité de traitement de données pour chaque satellite :

- calcul (262) d'une variation de position à partir :

  ◦ d'une phase d'un premier signal de radionavigation émis par le satellite et reçu par le récepteur à un instant de réception initial, et
  ◦ d'une phase d'un deuxième signal de radionavigation émis par le satellite et reçu par le récepteur à un instant de réception ultérieur,

- estimation (264) d'un déplacement du récepteur par rapport au satellite entre l'instant de réception initial et l'instant de réception ultérieur, à partir des données suivantes :

  ◦ une position du satellite à l'instant de réception initial,
  ◦ une position du satellite à l'instant de réception ultérieur,
  ◦ une position à l'instant de réception initial fournie par la centrale inertielle (3), et
  ◦ une position à l'instant de réception ultérieur fournie par la centrale inertielle (3),

- calcul (266) d'un écart entre la variation de position calculée et le déplacement du récepteur par rapport au satellite estimé, le déplacement de la centrale inertielle estimé dépendant de cet écart.

**12.** Dispositif (2) selon la revendication précédente, comprenant en outre un récepteur de radionavigation (1) configuré pour acquérir des mesures de radionavigation à partir de signaux de radionavigation préalablement émis par un satellite, et configuré pour transmettre lesdites mesures à l'unité de traitement de données.

**13.** Système comprenant :

• un dispositif de détection (2) selon l'une des revendications 11 à 12,
• une unité de navigation (20) configurée pour mettre en œuvre un alignement statique d'une centrale inertielle (3) en fonction d'un mouvement parasite détecté par le dispositif de détection (2).

**14.** Produit programme d'ordinateur comprenant des instructions de code de programme pour l'exécution des étapes du procédé selon l'une des revendications 1-9, lorsque ce produit programme est exécuté par au moins une unité de traitement de données d'un dispositif selon la revendication 11.

**15.** Produit programme d'ordinateur comprenant des instructions de code de programme pour l'exécution des étapes du procédé selon la revendication 10, lorsque ce produit programme est exécuté par au moins une unité de traitement de donnés d'un système selon la revendication 13.

**Patentansprüche**

**1.** Verfahren zur Detektion von Störbewegungen bei einer statischen Ausrichtung einer Trägheitsmesseinheit (3), wobei das Verfahren **gekennzeichnet ist durch** Schritte des:

- Empfangens von Funknavigationsmessungen, die von einem Empfänger (1) auf Grundlage von Signalen, welche zuvor von einem Satz (S) Funknavigationssatelliten gesendet werden, erfasst (100) werden,
- Schätzens (260) einer Verlagerung der Trägheitsmesseinheit (3) auf Grundlage der erfassten Messungen,
- Vergleichens (280) der geschätzten Verlagerung mit einer vorbestimmten Schwelle,
- Signalisierens (290) einer Störbewegung der Trägheitsmesseinheit (3), wenn die Verlagerung die vorbestimmte Schwelle übersteigt,

**dadurch gekennzeichnet, dass** das Schätzen (260) der Verlagerung der Trägheitsmesseinheit (3) auf Grundlage der erfassten Messungen die folgenden Schritte umfasst, die für jeden Satelliten umgesetzt werden:

- Berechnen (262) einer Positionsänderung auf Grundlage:

-- einer Phase eines ersten Funknavigationssignals, das vom Satelliten gesendet und vom Empfänger zu einem initialen Empfangszeitpunkt empfangen wird, und
-- einer Phase eines zweiten Funknavigationssignals, das vom Satelliten gesendet und vom Empfänger zu einem späteren Empfangszeitpunkt empfangen wird,

- Schätzen (264) einer Verlagerung des Empfängers im Verhältnis zum Satelliten zwischen dem initialen Empfangszeitpunkt und dem späteren Empfangszeitpunkt auf Grundlage der folgenden Daten:

-- einer Position des Satelliten zum initialen Empfangszeitpunkt,
-- einer Position des Satelliten zum späteren Empfangszeitpunkt,
-- einer Position zum initialen Empfangszeitpunkt, die von der Trägheitsmesseinheit (3) bereitgestellt wird, und
-- einer Position zum späteren Empfangszeitpunkt, die von der Trägheitsmesseinheit (3) bereitgestellt wird,

- Berechnen (266) einer Abweichung zwischen der berechneten Positionsänderung und der geschätzten Verlagerung des Empfängers im Verhältnis zum Satelliten, wobei die geschätzte Verlagerung der Trägheitsmesseinheit von dieser Abweichung abhängt.

**2.** Verfahren nach dem vorstehenden Anspruch, weiter umfassend:

- den Empfang einer Nachricht über den Start der Ausrichtung der Trägheitsmesseinheit, wobei jedes Signal, das zu einem initialen Zeitpunkt empfangen wird, das erste Signal ist, das vom Empfänger nach dem Empfang der Startnachricht von einem der Satelliten empfangen wird.

3. Verfahren nach einem der vorstehenden Ansprüche, wobei das Schätzen (260) der Verlagerung der Trägheitsmesseinheit auf Grundlage der erfassten Messungen den folgenden Teilschritt umfasst, der für jeden Satelliten umgesetzt wird:

   - Berechnen (268) einer Änderung, zwischen dem initialen Empfangszeitpunkt und dem späteren Empfangszeitpunkt, des Richtungskosinus einer Sichtlinie (L), die den Empfänger mit dem Satelliten verbindet, wobei die geschätzte Verlagerung der Trägheitsmesseinheit von der berechneten Richtungskosinus-Änderung abhängt.

4. Verfahren nach dem vorstehenden Anspruch, wobei der Satz (S) mindestens vier Satelliten umfasst.

5. Verfahren nach einem der vorstehenden Ansprüche, wobei die initialen Empfangszeitpunkte bei allen den Satelliten im Wesentlichen gleich sind, und die späteren Empfangszeitpunkte bei allen den Satelliten im Wesentlichen gleich sind.

6. Verfahren nach einem der vorstehenden Ansprüche, wobei die Verlagerung der Einheit über ein Verfahren der kleinsten Quadrate, das auf die verschiedenen berechneten Abweichungen angewendet wird, geschätzt (269) wird.

7. Verfahren nach einem der vorstehenden Ansprüche, wobei bei jedem Funknavigationssignal, das von einem der Satelliten gesendet wird,

   - die Navigationsmessungen eine Position des Satelliten zu einem Zeitpunkt des Sendens durch den Satelliten umfassen,
   - die Position des Satelliten zum Empfangszeitpunkt des Signals auf Grundlage der Position des Satelliten zum Sendezeitpunkt desselben Signals berechnet wird.

8. Verfahren nach dem vorstehenden Anspruch, wobei die Position des Satelliten zum Sendezeitpunkt in einem terrestrischen Koordinatensystem des Empfangszeitpunks ausgedrückt wird, und berechnet wird durch Multiplikation:

   - eines Vektors von Koordinaten des Satelliten zum Sendezeitpunkt, wobei die Koordinaten im terrestrischen Koordinatensystem zum Sendezeitpunkt ausgedrückt werden, mit
   - einer Matrix, die eine Drehung des terrestrischen Koordinatensystems während der Ausbreitung des Funknavigationssignals vom Satelliten zum Empfänger zwischen dem Sendezeitpunkt und dem Empfangszeitpunkt wiedergibt.

9. Verfahren nach einem der vorstehenden Ansprüche, das ein Verifizieren (220) der Gültigkeit der vom Empfänger (1) erfassten Messungen umfasst, wobei der Schritt des Schätzens (266) der Verlagerung selektiv auf der Basis von gültig deklarierten Messungen umgesetzt wird.

10. Verfahren zur statischen Ausrichtung einer Trägheitsmesseinheit (3), das Schritte umfasst des:

    - Detektierens einer Störbewegung der Trägheitsmesseinheit (3) mithilfe des Verfahrens nach einem der vorstehenden Ansprüche im Laufe der statischen Ausrichtung,
    - in Reaktion auf die Detektion, Aussetzens (320) der Ausrichtung, oder Rekonfigurierens von mindestens einem Ausrichtungsparameter, der verwendet wird, um die Trägheitsmesseinheit auszurichten, in Abhängigkeit von der detektierten Störbewegung.

11. Vorrichtung (2) zur Detektion von Störbewegungen bei einer statischen Ausrichtung einer Trägheitsmesseinheit (3), wobei die Vorrichtung umfasst:

    - einen Eingang zum Empfangen der Navigationsmessungen, die von einem Empfänger (1) von Funknavigationssignalen, welche zuvor von einem Satz (S) Funknavigationssatelliten gesendet werden, erfasst werden,
    - eine Datenverarbeitungseinheit (20), die dafür konfiguriert ist:

      -- eine Verlagerung der Trägheitsmesseinheit (3) auf Grundlage der erfassten Navigationsmessungen zu schätzen,

-- die geschätzte Verlagerung mit einer vorbestimmten Schwelle zu vergleichen,

- einen Ausgang zum Senden der Daten, die eine Störbewegung der Trägheitsmesseinheit signalisieren, wenn die Verlagerung die vorbestimmte Schwelle übersteigt,

**dadurch gekennzeichnet, dass** das Schätzen (260) der Verlagerung der Trägheitsmesseinheit (3) auf Grundlage der erfassten Messungen die folgenden Schritte umfasst, die von der Datenverarbeitungseinheit für jeden Satelliten umgesetzt werden:

- Berechnen (262) einer Positionsänderung auf Grundlage:

-- einer Phase eines ersten Funknavigationssignals, das vom Satelliten gesendet und vom Empfänger zu einem initialen Empfangszeitpunkt empfangen wird, und
-- einer Phase eines zweiten Funknavigationssignals, das vom Satelliten gesendet und vom Empfänger zu einem späteren Empfangszeitpunkt empfangen wird,

- Schätzen (264) einer Verlagerung des Empfängers im Verhältnis zum Satelliten zwischen dem initialen Empfangszeitpunkt und dem späteren Empfangszeitpunkt auf Grundlage der folgenden Daten:

-- einer Position des Satelliten zum initialen Empfangszeitpunkt,
-- einer Position des Satelliten zum späteren Empfangszeitpunkt,
-- einer Position zum initialen Empfangszeitpunkt, die von der Trägheitsmesseinheit (3) bereitgestellt wird, und
-- einer Position zum späteren Empfangszeitpunkt, die von der Trägheitsmesseinheit (3) bereitgestellt wird,

- Berechnen (266) einer Abweichung zwischen der berechneten Positionsänderung und der geschätzten Verlagerung des Empfängers im Verhältnis zum Satelliten, wobei die geschätzte Verlagerung der Trägheitsmesseinheit von dieser Abweichung abhängt.

12. Vorrichtung (2) nach dem vorstehenden Anspruch, die weiter einen Funknavigationsempfänger (1) umfasst, der dafür konfiguriert ist, Funknavigationsmessungen auf Grundlage von Funknavigationssignalen zu erfassen, welche zuvor von einem Satelliten gesendet werden, und dafür konfiguriert ist, die Messungen an die Datenverarbeitungseinheit zu übertragen.

13. System, umfassend:

- eine Detektionsvorrichtung (2) nach einem der Ansprüche 11 bis 12,
- eine Navigationseinheit (20), die dafür konfiguriert ist, eine statische Ausrichtung einer Trägheitsmesseinheit (3) in Abhängigkeit von einer von der Detektionsvorrichtung (2) detektierten Störbewegung umzusetzen.

14. Computerprogrammprodukt, das Programmcodeanweisungen zum Ausführen der Schritte des Verfahrens nach einem der Ansprüche 1-9 umfasst, wenn dieses Programmprodukt von mindestens einer Datenverarbeitungseinheit einer Vorrichtung nach Anspruch 11 ausgeführt wird.

15. Computerprogrammprodukt, das Programmcodeanweisungen zum Ausführen der Schritte des Verfahrens nach Anspruch 10 umfasst, wenn dieses Programmprodukt von mindestens einer Datenverarbeitungseinheit eines Systems nach Anspruch 13 ausgeführt wird.

**Claims**

1. A method for detecting parasitic movements during static alignment of an inertial unit (3), the method being **characterized by** steps of:

• receiving radio navigation measurements acquired (100) by a receiver (1) from signals previously transmitted by a set (S) of radio navigation satellites,
• estimating (260) a displacement of the inertial unit (3) from the measurements acquired,

• comparing (280) the estimated displacement with a predetermined threshold,
• signaling (290) a parasitic movement of the inertial unit (3) when the displacement crosses the predetermined threshold,

**characterized in that** estimating (260) the displacement of the inertial unit (3) from the acquired measurements comprises the following steps, conducted for each satellite:

• calculation (262) of a position variation from:

◦ a phase of a first radio navigation signal transmitted by the satellite and received by the receiver at an initial reception time, and
◦ a phase of a second radio navigation signal transmitted by the satellite and received by the receiver at a subsequent reception time,

• estimation (264) of a displacement of the receiver relative to the satellite between the initial reception time and the subsequent reception time, from the following data:

◦ a position of the satellite at the initial reception time,
◦ a position of the satellite at the subsequent reception time,
◦ a position at the initial reception time provided by the inertial unit (3), and
◦ a position at the subsequent reception time provided by the inertial unit (3),

• calculation (266) of a deviation between the calculated variation in position and the estimated displacement of the receiver relative to the satellite, the estimated displacement of the inertial unit depending on this deviation.

2. The method according to the preceding claim, further comprising:

• receiving a message of start-up of alignment of the inertial unit, each signal received at an initial time being the first signal received by the receiver originating from one of the satellites, after reception of the start-up message.

3. The method according to one of the preceding claims, wherein estimating (260) the displacement of the inertial unit from the acquired measurements comprises the following sub-step conducted for each satellite:

• calculation (268) of a variation, between the initial reception time and the subsequent reception time, of the direction cosine of a sight line (L) connecting the receiver to the satellite, displacement of the estimated inertial unit depending on the variation in calculated direction cosine.

4. The method according to the preceding claim, wherein the set (S) comprises at least four satellites.

5. The method according to one of the preceding claims, wherein the initial reception times are substantially identical for all the satellites, and the subsequent reception times are substantially identical for all the satellites.

6. The method according to one of the preceding claims, wherein the displacement of the unit is estimated (269) by a least square method applied to the different deviations calculated.

7. The method according to one of the preceding claims, wherein, for each radio navigation signal transmitted by one of the satellites,

• the navigation measurements comprise a position of the satellite at a transmission time by the satellite,
• the position of the satellite at the reception time of said signal is calculated from the position of the satellite at the transmission time of the same signal.

8. The method according to the preceding claim, wherein the position of the satellite at the transmission time is expressed in a terrestrial frame of the reception time, and is calculated by multiplication:

• of a vector of coordinates of the satellite at the transmission time, the coordinates being expressed in the terrestrial frame at the transmission time, by

• a matrix representative of rotation of the terrestrial frame during propagation of the radio navigation signal from the satellite to the receiver, between the transmission time and the reception time.

9. The method according to one of the preceding claims, comprising verifying (220) the validity of measurements acquired by the receiver (1), the estimation step (266) of the displacement being conducted selectively on the basis of measurements declared valid.

10. A method of static alignment of an inertial unit (3) comprising steps of:

• detection of a parasitic movement of the inertial unit (3) by means of the method according to one of the preceding claims during the static alignment,
• in response to detection, suspension (320) of the alignment, or reconfiguration of at least one alignment parameter used to align the inertial unit, as a function of the parasitic movement detected.

11. A device (2) for detecting parasitic movements during static alignment of an inertial unit (3), the device comprising:

• an input for receiving navigation measurements acquired by a receiver (1) of radio navigation signals previously transmitted by a set (S) of radio navigation satellites,
• a data-processing unit (20) configured for:

◦ estimating a displacement of the inertial unit (3) from the navigation measurements acquired,
◦ comparing the estimated displacement with a predetermined threshold,

• an output for transmitting data signaling a parasitic movement of the inertial unit when the displacement crosses the predetermined threshold,

**characterized in that** estimating (260) the displacement of the inertial unit (3) from the acquired measurements comprises the following steps, conducted by the data-processing unit for each satellite:

• calculation (262) of a position variation from:

◦ a phase of a first radio navigation signal transmitted by the satellite and received by the receiver at an initial reception time, and
◦ a phase of a second radio navigation signal transmitted by the satellite and received by the receiver at a subsequent reception time,

• estimation (264) of a displacement of the receiver relative to the satellite between the initial reception time and the subsequent reception time, from the following data:

◦ a position of the satellite at the initial reception time,
◦ a position of the satellite at the subsequent reception time,
◦ a position at the initial reception time provided by the inertial unit (3), and
◦ a position at the subsequent reception time provided by the inertial unit (3),

• calculation (266) of a deviation between the calculated variation in position and the estimated displacement of the receiver relative to the satellite, the estimated displacement of the inertial unit depending on this deviation.

12. The device (2) according to the preceding claim, further comprising a radio navigation receiver (1) configured to acquire radio navigation measurements from radio navigation signals previously transmitted by a satellite and configured to transmit said measurements to the data-processing unit.

13. A system comprising:

• a detection device (2) according to one of claims 11 to 12,
• a navigation unit (20) configured to implement static alignment of an inertial unit (3) as a function of parasitic movement detected by the detection device (2).

14. A computer program product comprising program code instructions for execution of the steps of the method according to one of claims 1 to 9, when this program product is executed by at least one data-processing unit of a device according to claim 11.

15. A computer program product comprising program code instructions for execution of the steps of the method according to claim 10, when this program product is executed by at least one data-processing unit of a system according to claim 13.

**FIG. 1**

FIG. 2

**200** Réception d'un message de démarrage ← Démarrage d'alignement

**300**

**100** Acquisition mesures → Vérification de la validité des mesures **220**

Mémorisation des mesures **240**

Estimation déplacement **260**

Comparaison du déplacement avec un seuil **280**

**320**

**290** Signalement déplacement → Reconfiguration ou interruption

**340** Fin de l'alignement

19

EP 3 374 800 B1

Calcul de variation de phase — 262

Estimation de modèle de variation de phase — 264

Calcul d'écart entre variation de phase et modèle — 266

Pour N satellites

calcul de cosinus directeur — 268

260

calcul du déplacement — 269

**FIG. 3**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2951535 A1
- WO 2006025825 A